# EUROPEAN PATENT APPLICATION

(11) **EP 2 364 623 A2**
(43) Date of publication of application: **14.09.2011**
(21) Application number: 10196823.8
(22) Date of filing: 22.02.2007
(51) Int. Cl.: A47J 27/21, B05B 11/00, A47J 36/24

(54) **Liquid heating vessel**

(30) Priority: 23.02.2006 GB 0603658
(62) Divisional of application: 07705257.9
(71) Applicant: Otter Controls Limited, Derbyshire SK17 7LF (GB)
(72) Inventor: Smith, David Andrew, Buxton, Derbyshire SK17 7LF (GB)
(74) Representative: Cross, James Peter Archibald

(57) **Abstract**

A liquid heating vessel (10) comprises a reservoir to hold a liquid, heating means (15) operable to warm the liquid to below boiling point, and a dispenser comprising a nozzle (12) and a pump (16).
The wall of the reservoir comprises a thermally insulated portion (44).

## Description

### Field of the Invention

The present invention relates to a liquid heating vessel.

### Background to the Invention

Liquid heating vessels such as electrically-heated kettles are commonly used for heating water up to boiling or sub-boiling temperature for the preparation of beverages, rehydration of snacks etc. Kettles are also used for other purposes where a hot liquid is required, but problems may arise from such use.

In one example, kettles are often used to defrost car windscreens by tipping boiling water over them, but this risks scalding the user and/or cracking the windscreen, and is not a very effective way of distributing hot water evenly over the windscreen.

In another example, kettles may be used to heat up water for the preparation of a hot detergent solution. However, water poured directly from the kettle once it has switched off is typically too hot for this purpose and cold water must be mixed into the solution. Moreover, the detergent solution must then be applied to the surface to be cleaned.

Hence, there are many uses such as those described above to which kettles are currently put, but for which they are not well suited. These problems are not unique to kettles. For example, electrically-heated saucepans are often used to heat up sauces or gravy, which must then be poured into a suitable vessel for serving at table; the sauce or gravy then rapidly becomes cold. However, it would be unsafe to bring the electrically-heated saucepan to the table, because of the risk of spillage and scalding.

### Statement of the Invention

According to one aspect of the present invention there is provided a liquid heating vessel comprising a reservoir, heating means operable to heat the contents of the reservoir, and dispensing means for dispensing said contents, said dispensing means comprising a pump and a nozzle.

In preferred embodiments the vessel includes a liquid temperature control for switching off or reducing electrical power to the heating means when the liquid reaches a predetermined temperature limit. In one example, the temperature limit is in the range 40° C to 70° C, most preferably around 60° C. This temperature limit reduces the risk of scalding, but is hot enough for applications such as defrosting, heated detergents and heated condiments or sauces. The temperature limit is significantly below the temperature required for the preparation of beverages, and is believed novel in itself, at least where the temperature limit is not adjustable by the user. Hence in another aspect, the present invention provides a liquid heating vessel comprising a reservoir, heating means operable to heat the contents of the reservoir, and temperature control means arranged to switch off or reduce the electrical power to the heating means when the liquid reaches a substantially fixed temperature limit in the range 40° C to 70° C, and preferably around 60° C.

It is further preferred that the vessel includes an overheat control, set to switch off the heating means at an overheat temperature higher than the temperature limit. Such arrangement is particularly advantageous as it provides overheat protection should the liquid temperature control fail. The overheat temperature may be between 70° C and 90° C, and most preferably 80° C. This temperature is significantly lower than the overheat temperature of conventional electrically heated vessels thereby providing greater safety, and reducing the requirements for the materials of the vessel to be temperature-resistant. This aspect is also considered novel, and another aspect of the present invention provides a liquid heating vessel comprising a reservoir, heating means operable to heat the contents of the reservoir, liquid temperature control means arranged to switch off or reduce the electrical power to the heating means when the liquid reaches a predetermined temperature limit, and overheat protection means arranged to switch off electrical power to the heating means when it detects a temperature in the range 70° C to 90° C, and preferably around 80°C.

Preferably the reservoir comprises a thermally insulated portion, such that a user may hold the device without discomfort when the liquid has reached the temperature limit. The thermally insulated portion need only extend over a portion of the vessel arranged for holding by the user. The thermally insulated portion is significantly more insulated than other parts of the vessel wall not arranged for holding. The vessel need not have a separate handle portion, as is normal with kettles and the like; instead, the thermally insulated portion may comprise part of the wall of the reservoir. This in itself is believed novel, and in another aspect of the invention there is provided a liquid heating vessel comprising a reservoir having a reservoir wall, heating means operable to heat the contents of the reservoir, and a thermally insulated portion forming part of the vessel wall and arranged for holding by a user. Preferably, the thermally insulated portion is arranged for holding with one hand.

It is preferred that the reservoir comprises a pressure release means, such as a vent. However, the pressure release valve should preferably not allow liquid egress, and so may comprise a valve such as a slit valve or a spring-loaded pressure relief valve.

It is preferred that the reservoir and dispensing means comprises a discrete reservoir body that is removably mountable on a power base and connected to the power base by a cordless power connector. Preferably the power connector is a 360° power connector, allowing the reservoir body to be connected to the power base at any azimuthal angle. It is preferred that the power base contains the liquid temperature control and/or the overheat control. This arrangement reduces the weight of the reservoir body. The vessel body may also be washable without damaging the controls. Preferably, the heating means is provided in the reservoir body, so that the power base is not heated and does not present a risk of burning.

It is preferred that the dispensing means comprises a spray nozzle. The spray nozzle may be adjustable to dispense the liquid in a spray or a jet. Such a spray nozzle is known *per se,* but its provision as a means of dispensing liquid from an electrically heated vessel is believed new and inventive. This arrangement is particularly advantageous for the application of heated detergent to surfaces, or for defrosting.

### Brief Description of the Drawings

In order that the present invention may be more readily understood, specific embodiments thereof will now be described with reference to the accompanying drawings:
Figure 1 shows a diagrammatic representation of a first embodiment of the present invention;
Figure 2 shows a cut-away of the reservoir and the dispensing means of the embodiment of Figure 1;
Figure 3 shows a top view of a suitable heating element temperature control; and
Figure 4 shows a second embodiment of the present invention.

### Detailed Description of Embodiments

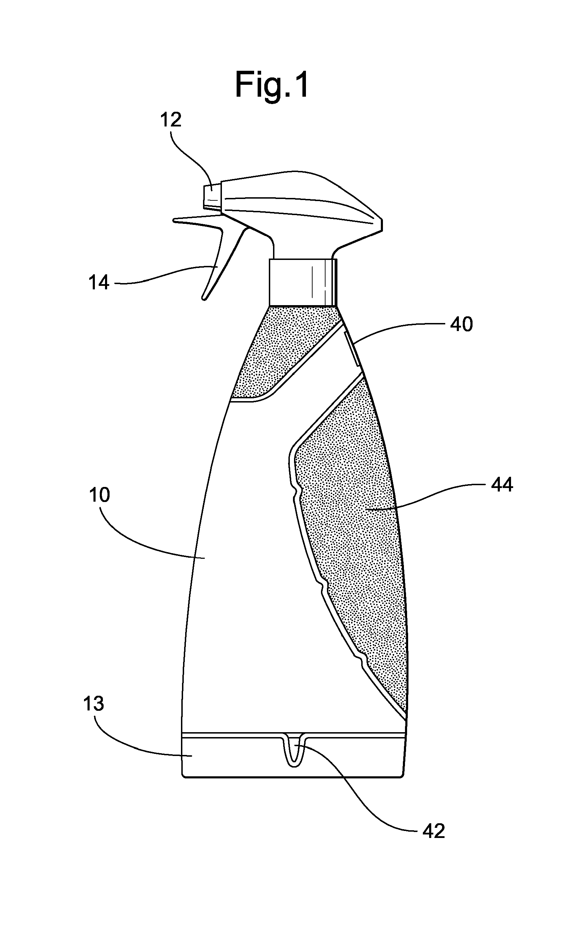

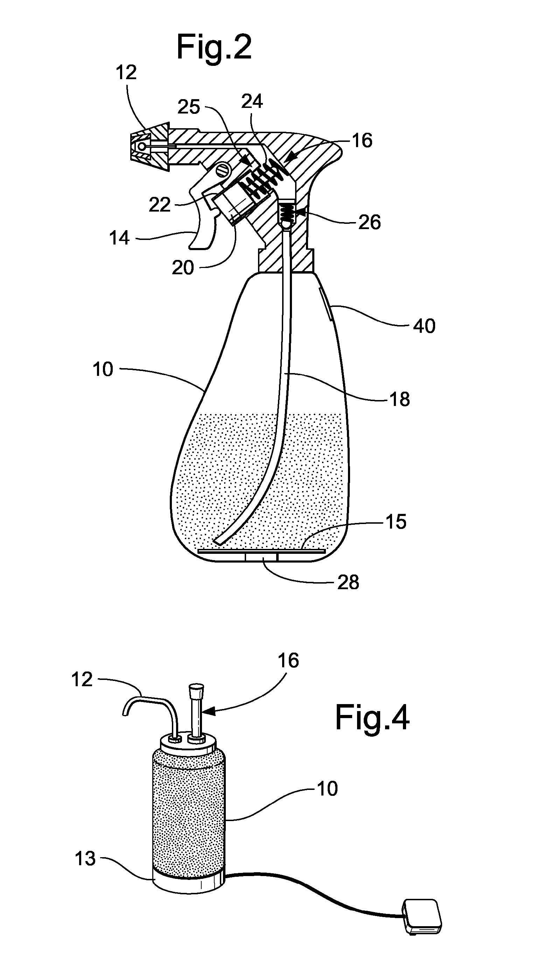

A first embodiment of the invention, shown in Figures 1 and 2, comprises an electrically heated spray bottle having a reservoir 10, a nozzle 12 and a power base 13.

As will be apparent from Figure 2, the nozzle 12 is connected to a manually actuable trigger 14, a pump mechanism 16 and a tube 18. The trigger 14 actuates the pump mechanism 16. The pump mechanism 16 comprises a piston 20 housed within a cylinder 22. A spring 24 is also located in said cylinder 22. When a user pulls the trigger 14, the piston 20 is pushed into the cylinder 22 and hence compresses the spring 24. When the trigger 14 is released, the piston is pushed back into the cylinder 22 by action of the spring.

When the piston is pushed within the cylinder, fluid is forced out of the pump mechanism 16. When the trigger 14 is released, the piston 20 moves out of the cylinder 22 (while still being retained within the cylinder housing), thus causing fluid liquid from the reservoir 10 to be drawn up the tube 18.

The pump mechanism 16 further comprises two one-way valves 24, 26 - one located between the cylinder 22 and the reservoir 10, and one between the cylinder 22 and the nozzle 12. This ensures that the liquid drawn from the reservoir 10 is forced out of the nozzle 12 and cannot flow back into the reservoir 10.

The nozzle 12 is rotatable such that a user may select between a concentrated jet and a dispersed spray. Such nozzles are known on existing spray bottles, and will not be described in depth here.

A heating element 15, such as a thick film element plate, is disposed in the base of the reservoir 10, together with a thermostat 28 to de-energise the element 15 when a predetermined temperature is reached. For example, the predetermined temperature may be 60°C, which is a suitable temperature for defrosting windscreens, or for use in cleaning operations using heated detergents for example. More generally, the predetermined temperature may be in the range 40° C to 70° C.

The heating element 15 may include a keep-warm element that is energised after the predetermined temperature is reached, so as to keep the liquid warm at a temperature below the predetermined temperature. Alternatively, the thermostat 28 may switch on the heating element 15 when the temperature of the liquid falls below a predetermined lower temperature.

There may also be provided an overheat control 30 for protecting the heating element 15 from overheating should the thermostat 28 fail. The overheat control 30 may switch off power to the heating element 15 when an overheat temperature significantly higher than the predetermined temperature is detected. The overheat temperature may be between 70° C and 90° C, and most preferably 80° C.

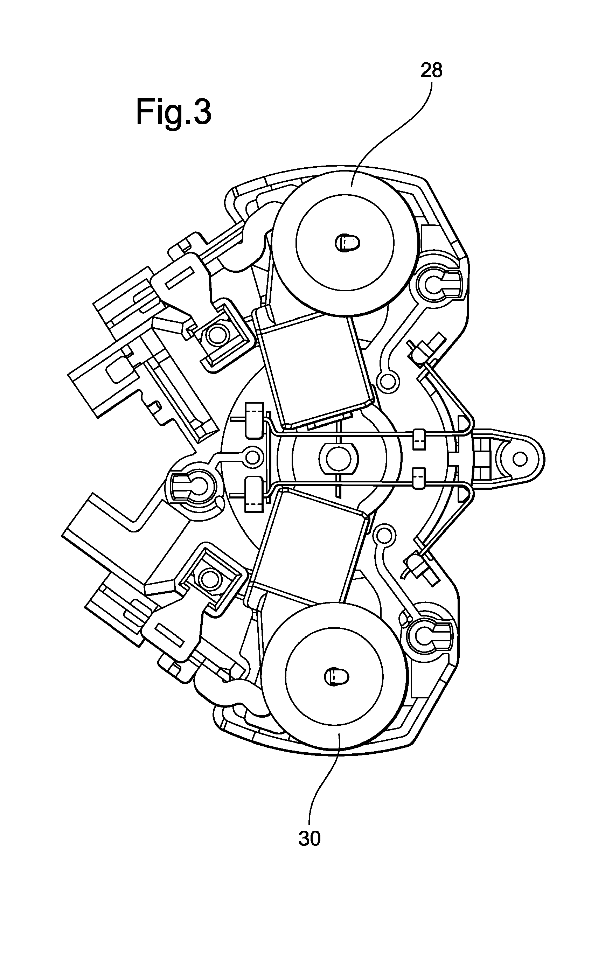

A temperature control suitable for use in this embodiment is described in GB-A-0329636, and shown in Figure 3. The control comprises first and second thermal actuators 28, 30. Said thermal actuators 28, 30 comprise bimetal discs that are operable to undergo a snap transformation. When each of the thermal actuators 28, 30, undergoes their snap transformation they are configured to cause the element 15 to be de-energised, and hence prevent the liquid within the reservoir 10 from being heated beyond a particular temperature.

In the present embodiment, the first thermal actuator 28 is typically configured to undergo its snap transformation at the predetermined temperature, such as 60°C. The second thermal actuator 30 is configured to activate at the overheat temperature, for example 80°C.

It will appreciated by those skilled in the art that any suitable heating means and temperature control means may be used, and that the temperature control shown in Figure 3 is done so for example only.

The power base 13 is operable to provide power to the heating element 15 to heat the liquid in the reservoir 10 to a temperature below boiling. In one embodiment, the base 13 comprises a 360° electrical connector of the type described in, for example, EP-A-0 922 426. This arrangement is particularly advantageous in that the user may use the heated spray bottle without having to carry the weight of the power base 13.

In an alternative embodiment, the thermostat 28 may be included within the power base 13, and may be connectable to a temperature sensor located within the reservoir portion.

A vent 40 is provided in a wall of the reservoir 10 to ensure that the pressure inside the reservoir 10 does not rise significantly due to the increase in the temperature of the contents of said reservoir 10. The vent 40 may be of any suitable configuration, such as an aperture in the wall of the reservoir 10, or a valve such as a slit valve or spring-loaded pressure relief valve.

The wall of the reservoir 10 may comprise a thermally insulated portion 44, so that a user may hold the reservoir 10 without discomfort when the liquid has reached the desired temperature. The thermally insulated portion 44 need only extend over a portion of the wall arranged for holding by the user. Alternatively, the entire wall may be thermally insulated, although this may add to the weight of the heated spray bottle.

Indication means, such as a light 42 (for example an LED), may be provided to indicate when the thermostat 28 has been activated, and hence when the temperature of the liquid contained in the reservoir 10 has been heated to the predetermined temperature limit.

Furthermore, it is preferred that the indication means 42 is located within the power base 13, as such arrangement allows for the reservoir portion of the apparatus to be easily washed in, for example, a dishwasher. Accordingly a washable connector, such as one that is described in GB 2387523 is preferable over a standard connector used on a typical electric jug.

This embodiment provides advantages in providing more efficient cleaning when using detergents, and in an alternative use, is safer than using, for example, a kettle of boiling water when de-icing a car windscreen. It is more convenient and safer than having to heat water in a kettle and then pour the water into a spray bottle. It also uses less power, and does not use the chemicals present in conventional spray de-icers.

The above embodiments describe the present invention in relation to a spray bottle, but the invention is applicable to many other applications. For example, a second embodiment comprises to a heated sauce dispenser as shown diagrammatically in Figure 4. In this embodiment, liquid is dispensed through a tube 12 rather than a spray nozzle. Sauce or condiment may be heated within the reservoir 10 until the predetermined temperature is reached, and the sauce or condiment may then be dispensed at this temperature using the pump 16. The sauce or condiment may be kept warm using a keep warm heater as described above. The present embodiment may be particularly useful in warming chocolate sauce.

In an alternative embodiment, the power base 13 comprises an induction heater and the heating element 15 comprises a plate that is inductively heated by the induction heater when the reservoir 10 is mounted on the power base 13.

It is understood that the above-described specific embodiments are for information only, and should not be used to determine, or restrict, the scope of the invention.

### Alternative Statements of Invention

Alternative statements of invention are recited in the numbered clauses below.
1. A liquid dispenser comprising: a reservoir; heating means operable to heat the contents of the reservoir; and a dispensing means for dispensing the contents, said dispensing means comprising a pump; wherein the reservoir is removably mountable on an electrical power base for supplying power to the heating means, such that power can be supplied to the heating means when the reservoir is mounted on the electrical power base, and the dispensing means is operable to dispense the contents when the reservoir is removed from the power base.
2. A liquid dispenser as recited in clause 1, including a liquid temperature thermostat arranged to disconnect or reduce power to the heating means when the liquid reaches a predetermined temperature.
3. A liquid dispenser as recited in clause 2, wherein the predetermined temperature is in the range 40° C to 70° C.
4. A liquid dispenser as recited in any preceding clause, further including an overheat control arranged to disconnect power to the heating means when an overheat temperature is reached.
5. A liquid dispenser as recited in clause 4, wherein the overheat temperature is in the range 70° C to 90° C.
6. A liquid dispenser as recited in any preceding clause, wherein a wall of the reservoir includes a thermally insulated portion arranged for holding by a user.
7. A liquid dispenser as recited in any preceding clause, wherein the reservoir includes a pressure release means.
8. A liquid dispenser as recited in any preceding clause, wherein the electrical power base comprises a cordless electrical connector.
9. A liquid dispenser as recited in clause 8, wherein the cordless electrical connector comprises a 360° connector.
10. A liquid dispenser as recited in any one of clauses 1 to 7, wherein the electrical power base comprises an inductive heater and the heating means comprises a member that is inductively heatable when the reservoir is mounted on the power base.
11. A liquid dispenser as recited in any preceding clause, wherein the dispensing means includes a nozzle through which the contents are dispensed in use.
12. A liquid dispenser as recited in clause 11, wherein the nozzle is a spray nozzle.
13. A liquid dispenser as recited in clause 12, wherein the nozzle is adjustable selectively to dispense the contents of the reservoir as a jet or a spray.
14. A liquid dispenser as recited in any preceding clause, wherein the pump is manually powered.
15. A cordless electrically heated spray bottle.
16. A cordless electrically heated sauce or condiment dispenser comprising a manual pump.
17. A liquid heating vessel comprising a reservoir, heating means operable to heat the contents of the reservoir, liquid temperature control means arranged to switch off or reduce the electrical power to the heating means when the liquid reaches a predetermined temperature limit in the range 40° C to 70° C, and overheat protection means arranged to switch off electrical power to the heating means when it detects a temperature above said predetermined temperature limit, in the range 70° C to 90° C.
19. A liquid heating vessel comprising: a reservoir; heating means operable to heat the contents of the reservoir; and a dispensing means for dispensing the contents, said dispensing means comprising a pump and a spray nozzle; wherein the reservoir is removably mountable on an electrical power base for supplying power to the heating means.

## Claims

1. Liquid heating vessel comprising a reservoir having a reservoir wall, heating means operable to heat the contents of the reservoir, and a thermally insulated portion forming part of the vessel wall and arranged for holding by a user.

2. Vessel of claim 1, wherein the thermally insulated portion extends only over a part of the wall arranged for holding by the user.

3. Vessel of any preceding claim, including dispensing means for dispensing the contents of the reservoir.

4. Vessel of claim 3, wherein the dispensing means comprises a pump.

5. Vessel of claim 4, wherein the pump is manually operable.

6. Vessel of any preceding claim, arranged for operation with one hand.

7. Vessel of any one of claims 3 to 6, including a nozzle through which the contents are dispensed in use.

8. Vessel of any preceding claim, wherein the reservoir is removably mountable on an electrical power base for supplying power to the heating means, such that power can be supplied to the heating means when the reservoir is mounted on the electrical power base.

9. Vessel of claim 8, wherein the electrical power base comprises a cordless electrical connector.

10. Vessel of any preceding claim, including a liquid temperature thermostat arranged to disconnect or reduce power to the heating means when the liquid reaches a predetermined temperature.

11. Vessel of claim 10, wherein the predetermined temperature is in the range 40° C to 70° C.

12. Vessel of any preceding claim, further including an overheat control arranged to disconnect power to the heating means when an overheat temperature is reached.

13. Vessel of claim 12, wherein the overheat temperature is in the range 70° C to 90° C.

14. Liquid heating vessel comprising a reservoir, heating means operable to heat the contents of the reservoir, liquid temperature control means arranged to switch off or reduce the electrical power to the heating means when the liquid reaches a predetermined temperature limit in the range 40° C to 70° C, and overheat protection means arranged to switch off electrical power to the heating means when it detects a temperature above said predetermined temperature limit, in the range 70° C to 90° C.

15. Vessel of any preceding claim, wherein the reservoir includes a pressure release means.
